# EUROPEAN PATENT APPLICATION

(11) **EP 2 614 891 A1**
(43) Date of publication of application: **17.07.2013**
(21) Application number: 12150611.7
(22) Date of filing: 10.01.2012
(51) Int. Cl.: B01J 39/04, B09B 3/00, C02F 1/42, C02F 11/04

(54) **A method for removing ammonium nitrogen from organic waste water**

(71) Applicant: RE-N Technology ApS, 4320 Lejre (DK)
(72) Inventor: Wennergren, Bo, 22592 Lund (SE); Christensen, Jens Tradsborg, 11826 Stockholm (SE)
(74) Representative: Trier, Mikkel Roed

(57) **Abstract**

The invention relates to a method for removing ammonium nitrogen from organic waste water, which method comprises the steps of applying waste water with a high content of ammonium to an organic, synthetic ion exchanger, allowing ammonium to adsorb to the ion exchanger, and regenerating the ion exchanger with regenerant solutions of very high molality.

## Description

The present invention relates to a method for removing ammonium nitrogen from organic waste water.

In many parts of the world, the nutrient cycles, which prevailed prior to the industrial revolution, have been extensively disturbed. Notably, a tremendous surplus of nitrogen has been built up in the environment as the Haber-Bosch nitrogen fixation process during the last century has become commonplace for the production of fertilizers and other chemicals. Actually, it is estimated that half of the nitrogen entering into the protein within human beings now originates from said anthropogenic process, whereas the remainder stems from natural nitrogen fixation by bacteria and archaea.

The increasing supply of available nitrogen has made possible an unprecedented rise in agricultural and industrial production but at the same time has resulted in a considerable unintended discharge of nitrogen to the environment, mainly in the form of ammonia, ammonium and nitrate.

In municipal, industrial and agricultural waste water, a substantial part of the nitrogen is often present as ammonium, much of which originates from the metabolism of animals. When leaving mammals, a considerable proportion of nitrogen in the metabolic waste products is present in the form of urea. Shortly thereafter, however, urea is converted into ammonium and carbon dioxide in a pH-neutral mixture. In the following period, then, carbon dioxide leaves, the pH increases and ammonia will start to evaporate.

Ammonia is an irritant of eyes, nose and lungs and in high concentrations may cause disease or even death. When released in large amounts into the atmosphere and deposited by air and rain in oligotrophic ecosystems such as bogs, moores and heathlands, the species making up the original vegetation are displaced by nitrophilic ones. Part of the nitrogen present will possibly leach in the form of nitrate to the ground water or run off to watercourses, bodies of fresh water and the sea, giving rise to further problems of pollution and eutrophication.

Therefore, considerable attention has been directed in recent decades to the development of procedures, whereby nitrogen in organic waste water can be selectively removed and retained in a form suitable for transport to regions with a smaller nitrogen load for use as a fertilizer or for other practical uses.

When nitrogen is to be recovered from organic waste water, an initial fractionation in a dry and a liquid fraction is normally effected by various means as a pronounced proportion of nitrogen is present in the liquid fraction of the waste. The dry waste fraction arising as a result of said fractionation may be used e.g. as a soil conditioner rich in phosphorus, as a biomass fuel, or as a raw material for a biogas plant.

According to known methods nitrogen has traditionally been removed from the liquid waste fraction by ammonia stripping and/or precipitation of ammonium salts for direct use as a fertilizer effected by addition of a range of extraneous chemicals.

In order to remove ammonium nitrogen from organic waste water with the expenditure of less energy and without relying on complex industrial equipment, the use of natural ion exchangers for scavenging ammonium ions by adsorption has been suggested. Thus, the International patent application WO 92/12944 discloses the use of a natural cation exchanger, notably the mineral glauconite, for removing ammonium nitrogen from an aqueous phase of liquid manure. Following steps of filtration, flocculation and sedimentation, an aqueous phase presenting a moderate nitrogen content is applied to the ion exchanger. The ion exchanger may be regenerated, preferably with an aqueous solution of CaCl₂, and the eluate is either stored as a separate product or united with a thick slurry originating from an initial separation of manure into different phases.

The methods of the prior art making use of natural ion exchangers for the removal of ammonium nitrogen from organic waste water entertained great hopes. Alas, they did not come up to the great expectations and have rarely been put to use in a commercial scale. Several major problems frustrated the attempts to obtain a functional and sustained large-scale operation of natural ion exchangers in the clearing away of ammonium from organic waste water.

When used for the purpose in question, beds of natural ion exchanger clog up by fine material arising from their own disintegration as well as by particles of dry matter, partly of organic nature, from the organic waste water. The percolation of the liquid to be cleansed is seriously impeded, so that the flow rate through the bulk of ion exchanger and thus its efficiency shrinks to an unsatisfactory level, in general to less than 3 mm/min. For each backflushing and treatment of the natural ion exchanger beds with regenerant solution the weathering of the ion exchanger material progresses such as to aggravate the problem of occlusion of the plant, yielding a pattern of inhibited and uneven flow through different parts of the ion exchanger beds.

Another drawback of the natural ion exchangers applied in the removal of ammonium nitrogen from organic waste water resides in their inherently low cation exchange capacity, often falling short of 1 molar equivalent per litre. It is impossible to attain a satisfactory concentration factor of ammonium during the process of ion exchanging. Following release of the adsorbed ammonium from the ion exchanger into a regenerant solution, the final volume of this liquid typically is not substantially smaller than the volume of the liquid to be treated at the beginning of the process.

Due to the considerable environmental and commercial interest involved, many experiments have been conducted in order to remedy the failings of processes employing natural ion exchangers for removal of ammonium nitrogen from organic waste water. Thus, the use of synthetic ion exchangers has been taken up as described, for instance, in the international application WO 2004/089833 A2 and the US application US 2008/053909 A1. However, a decisive part of the shortcomings recited in the above for natural ion exchangers persists, inasmuch as persuasively remunerative concentration factors have not been presented.

Generally, it seems that the principle of ion exchange for selective removal of ammonium from organic waste has been extensively abandoned in favour of direct precipitation of salts of ammonium by addition of suitable compounds to the liquid to be treated.

In view of the above, the object of the present invention is to provide an environmentally friendly procedure for removing ammonium nitrogen from liquid manure, which procedure is efficient, simple and durable and requires only a modest consumption of energy and extraneous, industrial chemicals.

To meet this object, a method for removing ammonium nitrogen from organic waste water is provided, which method comprises the steps of providing organic waste water with a content of ammonium nitrogen of less than 2 g/l; applying said waste water to an organic, synthetic ion exchanger adsorbing more than 1.2 eq/l (molar equivalents per litre), preferably more than 2.0 eq/l, in use; and allowing ammonium nitrogen from said waste water to adsorb to said ion exchanger, wherein the ion exchanger is subsequently regenerated with a solution of NaNO₃ of a molality from 3 mol/kg to full saturation and of a temperature from 5 to 40 °C, and/or with a solution of Na₂CO₃ of a molality from 1 mol/kg to full saturation and of a temperature from 5 to 40 °C, and/or with a solution of NaCl of a molality from 3 mol/kg to full saturation and of a temperature from 5 to 40 °C, and/or with a solution of Na₂SO₄ of a molality from 1 mol/kg to full saturation and of a temperature from 30 to 40 °C, and/or with a solution of K₂CO₃ of a molality from 4 mol/kg to full saturation and of a temperature from 5 to 40 °C, and/or with a solution of K₂HPO₄ of a molality from 4 mol/kg to full saturation and of a temperature from 5 to 40 °C, wherein the organic waste water has a content of organic matter of less than 8 % (w/w) at the time of application of said waste water to the ion exchanger, said organic matter being dissolved or being in particles of a maximum extension of 25 µm.

It has surprisingly been found that the use of an organic, synthetic ion exchanger in combination with said highly concentrated regenerant solutions makes it possible to remove ammonium nitrogen at a high flow rate and concentration factor directly from organic waste water, and in such a manner that these favourable properties of the ion exchanger persist even when it is repeatedly regenerated and exposed to the liquid to be treated for an extended period of time. In view of the problems hitherto encountered when dealing with natural ion exchangers for the purpose in question, the amazing durability and effectiveness found with beads of organic, synthetic ion exchanger is much more than what could be hoped for. Surprisingly, the inventors have realized that the organic, synthetic ion exchanger in the present application actually tolerates such very strong regenerant solutions despite express exhortations in the directions for use given by producers of synthetic ion exchangers that the latter only be regenerated with much weaker solutions in order not to destroy the ion exchanger as a result of excessive osmotic shock. The possibility of using strong regenerant solutions is a strongly contributory factor in achieving a high concentration factor. Besides, strong saline solutions effectively inhibit the establishment of most kinds of microbiological cultures in the bed of ion exchanger, so that a preceding step of pasteurizing the waste water to be treated may often be dispensed with.

Hereby, a robust, simple and effective method for removing ammonium nitrogen from liquid manure is provided, so that adverse effects relating to the discharge of various nitrogen compounds in organic waste water may be controlled.

The organic, synthetic ion exchanger is a cation exchanger preferably made from a gel resin, such as styrene crosslinked by addition of divinylbenzene at the polymerisation process and with strongly acidic functional groups, but may also be of a macroporous type. Moreover, one or more anion exchangers may also be present in the plant accommodating the cation exchanger.

The preferred solvent for the solutions applied for regeneration is water, although other suitable solvents may also come into question. The regenerant solutions of the respective salts may be employed singularly or combined. Each ion of ammonium (NH₄⁺) will exchange with one of the likewise monovalent ions of sodium (Na⁺) or potassium (K⁺), respectively, in the regenerant solutions. In this regard, it is to be understood that any of the listed salts into which enter two atoms of sodium or potassium per molecule will offer for ammonium exchange twice as many molar equivalents/kg as the molecular molality cited for the solution.

According to a preferred embodiment of the invention, the ion exchanger is brought on Na⁺-form or K⁺-form prior to the application of the waste water to the ion exchanger. For instance, if it has been preloaded with H⁺ ions or is entirely virgin it may be treated with a solution of sodium chloride, sodium nitrate or sodium sulphate. Other easily soluble cations, which in combination with the applied ion exchanger resin are suitable for selective exchange of ammonium ions from the liquid to be treated, may also come into consideration for pre-loading of the ion exchanger. Furthermore, older organic waste water rich in ammonia could be applied to a separate bed of organic, synthetic ion exchanger on H⁺-form.

In one embodiment, the ion exchanger is regenerated with a solution of K₂CO₃ having a temperature of 5 °C and a molality of more than 5 mol/kg, more than 6 mol/kg, preferentially 7 mol/kg. Most preferred, the ion exchanger is regenerated with a solution of K₂CO₃ of a molality of 8 mol/kg and a temperature of 20 °C.

The ion exchanger may also be regenerated with a solution of NaNO₃ having a temperature of 5 °C and a molality of more than 6 mol/kg, more than 7 mol/kg, advantageously 8 mol/kg. Further, it may be regenerated with a solution of NaNO₃ having a temperature of 10 °C and a molality of 9 mol/kg, or, most preferred, with a solution of NaNO₃ having a temperature of 20 °C and a molality of 10 mol/kg. The use of NaNO₃ as a regenerant is favourable in that ammonium nitrate results as a product. This is much in demand as a high-nitrogen fertilizer and as an explosive for coal and steel mining, quarrying, and construction works.

Likewise, the ion exchanger may be regenerated with a solution of Na₂CO₃ showing a temperature of 20 °C and a molality of 2 mol/kg, a temperature of 30 °C and a molality of 3 mol/kg, or, preferably, a temperature of 40 °C and a molality of 4.5 mol/kg. Ammonium hydrogen carbonate, which is a fertilizer much in demand in China, may advantageously be prepared by using Na₂CO₃ as a regenerant with ensuing passage of fine bubbles of carbon dioxide through the eluate and cooling thereof.

Regeneration of the ion exchanger can also be performed with a solution of Na₂SO₄ presenting a temperature of 30 °C and a molality of 2.5 mol/kg, or, favourably, presenting a temperature of 32 °C and a molality of 3.5 mol/kg. The resulting product, ammonium sulfate, is in demand as a fertilizer for alkaline soils and is moreover employed in vaccines, as a food additive and for purifying proteins by selective precipitation.

The ion exchanger may also be regenerated with a solution of NaCl of a molality of 6 mol/kg and a temperature of 5 °C, 10 °C, or preferably, 20 °C. In this way a method is provided, by which ammonium nitrogen from organic waste water can be recovered in a form having obvious and versatile applications. Ammonium chloride is suitable for use as a feed supplement for cattle and may be converted to a number of fertilizer products by established methods, but it also finds a great many non-agricultural uses in its own right. It is employed, e.g., in textile printing, plywood glue, hair shampoo, cleaning products, in nutritive media for yeast, as cough medicine, to slow the melting of snow on ski slopes at temperatures above 0 °C and as a flavour additive to liquorice and vodka.

Further, the ion exchanger can be regenerated with a solution of K₂HPO₄ of a molality of 5, 6, 7, or, preferably, 8 mol/kg and a temperature of 20 °C.

Generally, the salts of ammonium (and potassium) produced when regenerating the ion exchanger may be separated from the eluate streaming from the ion exchanger by addition of the regenerant salt at a specified temperature at which the solubility of the regenerant differs from the solubility of the ammonium and potassium salts. If the product salts present the lower solubility, they may be recovered as crystals. If they have the higher solubility, they can be recovered from the solution and the regenerant can be recovered as crystals.

According to a preferred embodiment, the step of applying waste water to the ion exchanger and the step of regenerating the ion exchanger are performed by turns in a series comprising more than 10, preferably more than 25, most preferred more than 50 repetitions of said steps, wherein the ion exchanger is not replaced during the duration of such a series. The inventors have unexpectedly found that the ion exchanger stands up to such a treatment without any significant impairment of its performance.

Preferentially, the concentration of ammonium nitrogen in the organic waste water exceeds 1 g/l, preferentially 1.5 g/l. Said concentrations are higher than that of organic waste water normally treated in sewage works. The use of a durable ion exchanger with a high exchange capacity, i.e. 1.2 molar equivalents per liter, preferably 2.0 molar equivalents per liter, renders possible to favourably treat liquids with high concentrations of ammonium by way of ion exchanging without the need for any pre-treatment to reduce the ammonium content of the liquid to be treated, which would otherwise not have been practical and profitable.

In one embodiment of the invention, the concentration of ammonium nitrogen in the organic waste water to be treated is 1,9 g/l or less.

According to one embodiment, the organic waste water has a content of organic matter of more than 1, more than 2, more than 3, or more than 5 % (w/w) at the time of application of said waste water to the ion exchanger, said organic matter being dissolved or in particles of a maximum extension of 25 µm. Surprisingly, such a considerable content of organic matter is reconcilable with the sustained functioning of the bed of organic, synthetic ion exchanger at a high flow rate and ion exchange capacity, despite the fact that organic, synthetic ion exchangers are manufactured and normally used for treatment in industry and research of liquids, which are substantially devoid of particles and organic matter.

In a specific embodiment, the organic wastewater to be treated comprises liquid manure. The liquid manure present in the organic waste water to be treated according to said embodiment of the invention may originate from any animal, but most often stems from livestock, e.g. pigs, cows or poultry. Prior to its application to the ion exchanger said manure may be admixed with other kinds of organic waste, such as municipal sewage.

The organic, synthetic ion exchanger may be installed at a central plant receiving manure-containing waste water from several external sources or it may be put up in a farm setting to be associated with a stable, be it a traditional or a loose-housing system, or a pigsty, be it indoors or outdoors. By the latter association the possibility of a predictable and stable supply of fresh manure is assured.

Preferably, the liquid manure results from a fractionation of manure, such as to restrict the occurrence of coarse, solid matter. Optionally, the manure is briefly stored in a reservoir before fractionation. The fractionation may be achieved by means of any kind of separator, optionally a screen shaker separator. The manure may also be separated in a decanter, optionally following treatment in a screw press. In a preferred embodiment, the liquid manure is pasteurised after fractionation and before being applied to the ion exchanger. This is done in order to inhibit microbiological growth and thus the formation of biofilms and particulate colonies in the bed of ion exchanger.

Advantageously, the liquid manure is fractionated and, after shortly residing in one or more buffer tanks, pasteurised and applied to the ion exchanger within a period from 2 days to 5 weeks after the occurrence of the underlying, causative defecation and urination to limit the emission of ammonia and assure that the manure is still relatively fresh and lends itself to fractionation. Processing the manure at such an early stage presents the additional advantage that the emission of methane and laughing gas, which are greenhouse gases 21 and 289 times as potent as carbon dioxide, respectively, is extensively limited.

The maximum size of the solid particles in the liquid manure to be applied to the ion exchanger preferably is equal to or less than 25 µm, most preferred less than 10 µm, in order not to restrict the flow of liquid through the bed of ion exchanger and its ion exchange capacity.

In a preferred embodiment, the organic waste water shows a pH in the range of 6.5-8.0 at the time of application of said waste water to the ion exchanger. To assure that the organic waste water is treated at a stage, where the predominant part of the nitrogen contained therein is present in the form of ammonium, it should not be left to turn alkaline. In case that a substantial part of the ammonium present has been allowed to convert to ammonia, it will be ineffective to apply the organic waste water to the ion exchanger on Na⁺-form or K⁺-form. Instead, organic waste water rich in ammonia as a result of extended storage could as mentioned earlier be applied to a separate bed of organic, synthetic ion exchanger on H⁺-form. On the other hand, fresh organic waste water, wherein the nitrogen is predominantly present in the form of ammonium, must not be applied to an ion exchanger on H⁺-form, even though this is the default loading of many commercial ion exchangers. Such applications will result in an effervescence of carbon dioxide of explosive character.

According to a preferred embodiment of the invention, the beads of the ion exchanger have a mean particle size of 0.4-1.0 mm, preferably 0.6-0.7 mm, and a uniformity coefficient of 1.2 or less, preferably 1.1 or less. The uniformity coefficient is defined as the relation between the particle size corresponding to the mesh at which 60% of the particles pass a sieve, and the particle size corresponding to the mesh at which 10% of the particles pass a sieve. If the beads are too large, the accessible surface area of the beads and thus the total exchange capacity of the bed of ion exchanger will be insufficient, whereas beads, which are too small, will float atop the liquid to be treated rather than being pervaded by it. Further, a low uniformity coefficient assures that the particles of the organic, synthetic ion exchanger are not packed too tightly and are less prone to clogging, especially when compared to natural ion exchangers. A much higher flow rate is made possible when employing an organic, synthetic ion exchanger. Whereas channeling at a low flow rate, and turbulence and flushing out of minor constituent particles at a high flow rate tend to occur in a bed of natural ion exchanger, the inventors have discovered that these phenomena are much less of a problem with organic, synthetic ion exchangers. Further, in a favourable embodiment, the beads of ion exchanger resin may be unpacked with regular intervals by blowing through compressed air from beneath the bed of ion exchanger.

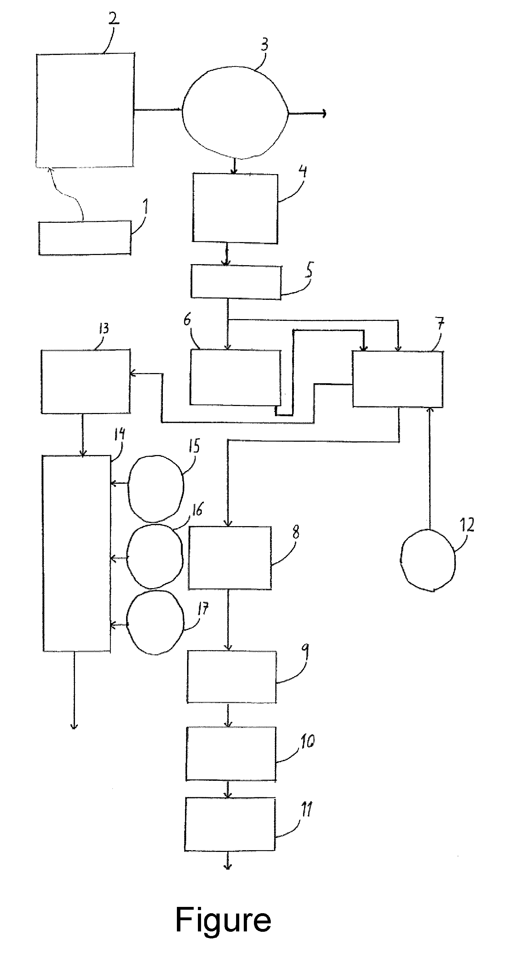

In the following, a preferred embodiment of the invention will be illustrated by reference to the non-limiting figure. The figure shows a schematic view of an embodiment of a plant for carrying out the method according to the invention.

Referring now to the figure, the main features of the illustrated plant are referenced by numbers as follows:

1 is a site for receipt of liquid manure and other materials entering into the organic waste water to be treated; 2 is a buffer tank; 3 is a decanter for separation of a solid phase from a liquid phase to be further treated; 4 is a buffer tank; 5 is a pasteurization unit; 6 and 7 are containers, each with a bed of organic, synthetic ion exchanger, wherein 6 may represent an array of multiple ion exchanger containers arranged in series or in parallel; 8 is a buffer tank; 9 is an ultrafiltration unit; 10 is an reverse osmosis unit; 11 is a buffer tank; 12 is a vessel containing a solution for regeneration of the ion exchanger; 13 is a buffer tank; 14 is a mixing tank; 15 is a vessel containing a solution of a formulation of nitrogen; 16 is a vessel containing a solution of a formulation of phosphorus; 17 is a vessel containing a solution of a formulation of potassium. In addition to the illustrated directional flows, further flows, which have not been shown for the sake of clarity, exist from 12 to 6 and from 6 to 13.

A description of a preferred embodiment of the process according to the invention as carried out in the plant of the figure will now be given.

Liquid manure is received together with other organic waste materials at the site 1, from where it is pumped or loaded as required to the buffer tank 2. It is delivered by truck from sources that are external to the plant. When arriving, the manure is of an age of 1 to 15 days and presents itself as a relatively fresh, thin slurry, wherein a pronounced majority of nitrogen is present as ammonium, pH is neutral and the content of carbonic acid is high. After residing in the buffer tank 2 for no more than a few days, portions of the mixture of organic waste materials are conveyed with regular intervals to the decanter 3 to be separated into two fractions. One fraction is a solid fraction and the other fraction is a liquid fraction having substantially no particles larger than 25 µm. The liquid fraction is stored in the buffer tank 4 for only long enough to ensure that substantially all urea from the manure is converted to ammonium and carbon dioxide. The solid fraction is transported to an external storage and plays no role in the ensuing process of the present invention.

From the buffer tank 4 the liquid fraction is pumped to the pasteurization unit 5 to be heated to at least 72 °C for not less than 15 seconds, so that the microorganisms present in the liquid are killed off or substantially reduced. In this way the establishment of bacterial and fungal colonies in the bed of ion exchanger is avoided or at least retarded.

Following pasteurization, the liquid fraction, containing ammonium nitrogen in a concentration of 1 g/l and 2% (w/w) of organic matter at this stage, is pumped to the containers 6 and 7, which in the present embodiment are parallelly arranged and have a bed of organic, synthetic ion exchanger within them. In case that large quantities of organic waste water were to be treated, further containers connected in parallel might have been present. The ion exchanger is made of a gel resin on Na⁺-form, having as its matrix styrene crosslinked by addition of divinylbenzene and having as functional group sulfonic acid. The total exchange capacity of the ion exchanger amounts to about 2 molar equivalents per litre, and the average bead size is about 0.65 mm, showing a uniformity coefficient of about 1.1. A volume of approximately 1.6 m³ of ion exchanger is present in each container, and the inner cross-sectional area of each container at the top level of the bed of ion exchanger is around 1.8 m².

The liquid to be treated is pumped to the top of each container such as to percolate through the bed of synthetic, organic ion exchanger by the force of gravity at a flow rate of 3-10 cm/min, which is 6 to 10 times higher than the flow rate attainable with natural ion exchangers. The operation proceeds at atmospheric pressure; however, at regular intervals the bed of ion exchanger is blown through by compressed air at a maximum of 2.0 bars from the bottom of the container in order to maintain a porous, homogenous overall structure of the bed.

The permeate is led to the buffer tank 8; otherwise, its use as a dilute fertilizer could have been desirable. Alternatively, it might also run through a bed of anion exchanger to remove phosphate ions. Subsequently, the permeate is adjusted to a prescribed water quality in the ultrafiltration unit 9 and the reverse osmosis unit 10 to finally arrive in the buffer tank 11, from which it is discarded or put to a suitable use according to local demands.

In the event that the plant for removal of ammonium nitrogen from organic waste water had been associated with a farm, the permeate could advantageously have been put to use in the continuous or intermittent flushing of manure from beneath the floor of a stable or pigsty with an eye to restricting the conversion of nitrogen in the manure from ammonium into ammonia. Preferably, the flushed manure including the permeate used for flushing would form the basis of the organic waste water to be applied to the ion exchanger, possibly after a brief stay in a reservoir with subsequent fractionation. Suitably, the flow of liquid manure, provided by said flushing using permeate from the ion exchanger, would have been timed such as to ascertain the conversion of urea contained in the manure into ammonium and carbon dioxide, while still restricting the conversion of ammonium into ammonia.

In this way, the permeate might have been turned to account in a most propitious way, as the flow of manure would henceforth be inherently integrated into the process for removal of ammonium nitrogen. Consequently, the manure would enter into a regular flow and would still be fresh when applied to the ion exchanger. Hereby, the emission of ammonia to the air of the stable or pigsty might be reduced by as much as 60% or more, and the ratio of ammonium to ammonia in the liquid manure to be treated would be sufficiently high to assure that a substantial part of the nitrogen present might be scavenged as ammonium ions in the ion exchanger. Conversely, if manure stored in a traditional way for a longer period in a manure tank or lagoon was to be cleansed from nitrogen by use of an ion exchanger, ammonia would be more prevalent and it would be necessary to include a step comprising pre-treatment with an acid or a step comprising separate treatment in a bed of H⁺-loaded ion exchanger to be regenerated with a solution of phosphoric acid or sulphuric acid if a similar effectiveness was to be attained.

Moreover, by recycling permeate instead of flushing with water, substantial savings might be gained and furthermore the flushing with permeate would not add to the overall volume of manure, as the fluid used in flushing itself originates from manure.

In the present embodiment, the supply of waste water to a bed of ion exchanger is interrupted when ammonium in a pre-specified concentration as determined by online measurements begins to leak from its bottom. Regeneration of the ammonium-saturated container is started while a fresh container is switched in to replace it in the ion exchange treatment of waste water. In this way a continuous operation of the plant is effected.

Before regeneration, however, the respective bed of ion exchanger is flushed with one bed volume of water such as to rinse out particulate matter and organic material from the ion exchanger.

The regeneration is performed with NaNO₃ in a concentration of about 10 mol/kg water, corresponding to an almost complete saline saturation, which is introduced at a temperature of about 20 °C to the bottom of the ion exchanger container from the vessel 12. At such a concentration, bacteria and fungi that might have been present in the bed of the ion exchanger are killed off to an extent that the preceding step of waste water pasteurization in this case could have been omitted. The applied ions of sodium act such as to replace adsorbed ions of potassium and subsequently ions of ammonium as well as some amino acids from the ion exchanger. The supply of saline solution is upheld until a pre-specified low level of ammonium is reached in the eluate leaving the bed of ion exchanger, whereupon the latter is rinsed again with water to clear it from sodium nitrate. Then the ion exchanger is ready again for treatment of the organic waste water.

Said rinsing water and the eluate is led to the buffer tank 13 as a solution of NH₄NO₃ and KNO₃. Subsequently, it is brought to the mixing tank 14, wherein a high-grade fertilizer is produced by adjusting the proportions in said solution of the most prevalent macronutrients. Suitable formulations of nitrogen, phosphorus and potassium are supplied from the vessels 15, 16, and 17, respectively, and other nutrients might have been added as well.

When operating according to the procedure outlined above, a very high proportion of the ammonium ions contained in approximately twenty bed volumes of organic waste water may be adsorbed to a single bed of organic, synthetic ion exchanger and be released into one bed volume or less of regenerant solution. In this way a concentration factor may be obtained, which is many times higher than the one achievable with natural ion exchangers and with the less strong regenerant solutions traditionally applied.

Generally, the concentration factor depend on a range of factors, notably: 1) The concentration of ammonium ions in the liquid to be treated; 2) the ion exchange capacity of the ion exchange resin; 3) the concentration of the regenerant solution (molar equivalents of positive charges); and 4) the flow pattern of regenerant solution in the bed of ion exchange resin.

Due to the large difference in concentration between the liquids applied in 1) and 3), respectively, according to the method of the invention, it is possible to reuse the last part of the eluate (the "tail") from the regeneration process for preparation of a new batch of regenerant solution, thereby further increasing the concentration factor. A proportionately modest concentration of ammonium in the regenerant solution does not significantly reduce the yield of the regeneration process and can therefore be accepted.

With regard to the flow pattern of regenerant solution, it has been found that a pulsed regeneration comprising repeated cycles of a high-flow phase followed by a pause allows for a significantly higher concentration factor due to a higher peak concentration of ammonium in the eluate and shorter tails. An example of a cycle of pulsed regenerant flow could be 15 bed volumes/h for 6 seconds followed by zero flow for 54 seconds, resulting in a mean flow rate of 1.5 bed volumes/h. During the high-flow phase, radial mixing in the bed of ion exchange is optimized, while diffusion into the ion exchanger beads is optimized during the pause. The resultant plug flow presents a high concentration in the front of the regenerant flow and short tails.

The invention will now be illustrated by way of the following non-limiting examples.

### Examples

### Example 1: Test of different types of organic, synthetic ion exchangers

Two organic, synthetic cation exchangers being of the gel resin type and the macroporous type, respectively, were brought on Na-form and compared with regard to their capacity for ammonium retention at a flow rate of 3 bed volumes per hour.

| Applied bed volumes of solution of NH₄⁺-N (1.1 g/l) - Pasteurized slurry filtrated to 25 µm | Dowex G-26 gel resin cation exchanger with strongly acidic functional groups, Na-form Ammonium retention % | Dowex M-31 macroporous cation exchanger with strongly acidic functional groups, Na-form Ammonium retention % |
|---|---|---|
| 0.5 | 100 | 100 |
| 1.0 | 100 | 100 |
| 1.5 | 100 | 100 |
| 2.0 | 100 | 100 |
| 2.5 | 100 | 100 |
| 3.0 | 100 | 100 |
| 3.5 | 100 | 100 |
| 4.0 | 100 | 100 |
| 5.0 | 100 | 99 |
| 6.0 | 100 | 99 |
| 7.0 | 100 | 97 |
| 8.0 | 100 | 95 |
| 10.0 | 100 | 88 |
| 12.0 | 99 | 79 |
| 14.0 | 98 | 70 |
| 16.0 | 98 | - |
| 18.0 | 97 | - |
| 20.0 | 97 | - |

Even though the ion exchanger of the gel resin type showed the best purification properties, the macroporous ion exchanger was also found to be fully applicable for the purpose according to the invention.

### Example 2: Separation efficiency of selected nutrients

A full-scale plant for carrying out the method according to the invention was set up at Wageningen University, Swine Research Centre Sterksel, Netherlands. Incoming pig manure one week old was separated into a solid and a liquid fraction with the aid of a decanter. The liquid fraction was shortly stored in a buffer tank, from which it was pumped onto an organic, synthetic ion exchanger.

The ion exchanger was constituted by beads of a gel resin on Na⁺-form, having as their matrix styrene crosslinked by addition of divinylbenzene and presenting as functional group sulfonic acid. The total exchange capacity of the ion exchanger amounted to approximately 2 molar equivalents per litre, while the average bead size was about 0.65 mm. The uniformity coefficient of the bulk of ion exchanger beads was about 1.1. A volume of approximately 1.6 m³ of ion exchanger was present in each container in a row of containers, and the inner cross-sectional area of each container at the top level of the bed of ion exchanger was approximately 1.8 m².

The liquid to be treated was pumped to the top of each container such as to percolate through the beds of synthetic, organic ion exchanger by the force of gravity at a flow rate of approximately 7 cm/min. Upon saturation of the respective beds of ion exchanger, as defined by a pre-specified ammonium leakage threshold, they were regenerated with a solution of NaNO₃ at a temperature of 20 °C and a concentration of about 10 mol/kg, yielding an eluate with nutrients, which had been adsorbed by the ion exchanger. The regeneration was continued until a pre-specified low level of ammonium in the eluate was reached.

The separation efficiency is a measure of the proportion of the mass input per nutrient that ends up in the eluate after being treated according to the above procedure. The separation efficiency was calculated by dividing the mass of nutrient in the eluate with the mass input of the nutrient.

A total of 6476 kg of liquid fraction presenting an organic matter content of 1.0% (w/w) and an ammonium nitrogen content of 1.9 g/l was treated.

| Nutrient | Total N | Total K | NH₄-N |
|---|---|---|---|
| Separation effi ciency (%) | 60 | 93 | 89 |

As appears, very high separation efficiencies for potassium as well as ammonium nitrogen were found. However, inasmuch as the operations of saturation and regeneration of the ion exchanger were performed with reference to pre-specified ammonium thresholds as mentioned in the above, the separation efficiencies may well be further augmented to a value close to 100% if desired by adjusting said thresholds.

### Example 3: Persistence of ammonium separation efficiency for different types of ion exchangers during multiple cycles of adsorption and regeneration

Two organic, synthetic cation exchangers of the gel resin type and the macroporous type, respectively, were brought on Na⁺-form and compared with regard to their capacity for sustained ammonium retention at a flow rate of 3 bed volumes per hour. Following adsorption of ammonium to the ion exchanger, the latter was regenerated every time with a solution of NaNO₃ at a molality of 10 mol/kg water and a temperature of 20 °C. A total of 10 runs were performed for the two tested ion exchangers.

| Applied bed volumes of solution of NH₄⁺-N (1 g/l) | Dowex G-26 gel resin cation exchanger with strongly acidic functional groups, Na-form Ammonium retention (%) Run no. 10 | Dowex M-31 macroporous cation exchanger with strongly acidic functional groups, Na-form Ammonium retention (%) Run no. 1 | Dowex M-31 Run no. 5 | Dowex M-31 Run no. 10 |
|---|---|---|---|---|
| 2.5 | 100 | 100 | 100 | 100 |
| 5.0 | 100 | 99 | 99 | 100 |
| 7.5 | 100 | 95 | 99 | 97 |
| 10.0 | 100 | 91 | 92 | 91 |
| 12.5 | 100 | 87 | 86 | 86 |
| 15.0 | 98 | 84 | 84 | 81 |
| 17.5 | 95 | 65 | 63 | 65 |

Albeit the best sustained ammonium purification properties were found for the ion exchanger of the gel resin type, the macroporous ion exchanger was also found to keep up a useful retention level.

### Example 4: Resistance of ion exchanger against osmotic shocks

A test was made to find out how repeated osmotic shocks would affect the organic, synthetic ion exchanger. Solutions of 4 mol/kg NaNO₃ and 1% (w/w) of NH₄Cl were applied by turns every 10 minutes to a bed of organic, synthetic ion exchanger. 50 cycles were run, meaning that the ion exchanger was subjected to 100 shifts of solution, which may each be considered an osmotic shock. Subsequently, a random sample of ion exchanger beads was sent to the manufacturer for analysis. It was found that approximately 5% of the beads were cracked. However, the original content of uncracked beads in the virgin ion exchanger was only guaranteed to a minimum proportion of 95%. Accordingly, no significant deteriorating effect of the osmotic shock treatment was found.

### Example 5: Long-time persistence of capacity and flow

Even after 12 months of continuously full scale processing of liquid manure in a plant operating according to the method of the invention and without any replacement of ion exchanger material from the plant, no problems related to lowered ion exchange capacity, decreased flow rate or bacterial growth turned up.

### Example 6: Concentration factor

One of the most extreme examples of a high concentration factor was obtained when adsorbing a 500 ppm ammonium solution on a bed of G26 ion exchanger bed. The regenerant was K₂CO₃, 16 molal in K⁺, and the eluate was 50 000 ppm ammonium in 0.5 bed volumes. The concentration factor was 200 times and substantially without any tailing of ammonium (ammonia). The absence of tailing may be explained by the chemical conversion of ammonium ions to ammonia in the strongly alkaline regenerant solution. This prevents ammonium ions from competing with the potassioum ions of the regenerant at the cationic sites of the ion exchanger. The regenerant in this case irreversibly replaces the active sites with its own ions. This theory is substantiated by the fact that regeneration with saturated K₂HPO₄ will give an equal or even larger concentration in the peak but results in a pronounced tailing. In the latter case ammonium ions presumably compete with potassium ions for adsorption.

## Claims

1. A method for removing ammonium nitrogen from organic waste water, which method comprises the steps of
(i) providing organic waste water with a content of ammonium nitrogen of less than 2 g/l;
(ii) applying said waste water to an organic, synthetic ion exchanger adsorbing, in use, more than 1.2 eq/l, preferably more than 2.0 eq/l; and
(iii) allowing ammonium nitrogen from said waste water to adsorb to said ion exchanger,
wherein, following step (iii), the ion exchanger is regenerated with a solution of NaNO₃ of a molality from 3 mol/kg to full saturation and of a temperature from 5 to 40 °C, and/or with a solution of Na₂CO₃ of a molality from 1 mol/kg to full saturation and of a temperature from 5 to 40 °C, and/or with a solution of NaCl of a molality from 3 mol/kg to full saturation and of a temperature from 5 to 40 °C, and/or with a solution of Na₂SO₄ of a molality from 1 mol/kg to full saturation and of a temperature from 30 to 40 °C, and/or with a solution of K₂CO₃ of a molality from 4 mol/kg to full saturation and of a temperature from 5 to 40 °C, and/or with a solution of K₂HPO₄ of a molality from 4 mol/kg to full saturation and of a temperature from 5 to 40 °C, wherein the organic waste water has a content of organic matter of less than 8 % (w/w) at the time of application of said waste water to the ion exchanger, said organic matter being dissolved or being in particles of a maximum extension of 25 µm.

2. The method according to claim 1, further comprising the step of bringing the ion exchanger on Na⁺-form or K⁺-form prior to the application of said waste water to the ion exchanger.

3. The method according to claim 1 or 2, wherein the ion exchanger is regenerated with a solution of K₂CO₃ of a molality of 8 mol/kg and a temperature of 20 °C.

4. The method according to claim 1 or 2, wherein the ion exchanger is regenerated with a solution of NaNO₃ of a molality of 10 mol/kg and a temperature of 20 °C.

5. The method according to claim 1 or 2, wherein the ion exchanger is regenerated with a solution of Na₂CO₃ of a molality of 4.5 mol/kg and a temperature of 40 °C.

6. The method according to claim 1 or 2, wherein the ion exchanger is regenerated with a solution of Na₂SO₄ of a molality of 3.5 mol/kg and a temperature of 32 °C.

7. The method according to claim 1 or 2, wherein the ion exchanger is regenerated with a solution of NaCl of a molality of 6 mol/kg and a temperature of 20 °C.

8. The method according to claim 1 or 2, wherein the ion exchanger is regenerated with a solution of K₂HPO₄ of a molality of 8 mol/kg and a temperature of 20 °C.

9. The method according to any of the preceding claims, wherein step (iii) and said step of regenerating the ion exchanger are performed by turns in a series comprising more than 10, preferably more than 25, most preferred more than 50 repetitions of said steps and wherein the ion exchanger is not replaced during the duration of said series.

10. The method according to any one of the preceding claims, wherein the concentration of ammonium nitrogen in the organic waste water exceeds 1 g/l, preferentially 1.5 g/l.

11. The method according to any one of the preceding claims, wherein the organic waste water has a content of organic matter of more than 1 % (w/w) at the time of application of said waste water to the ion exchanger.

12. The method according to any one of the preceding claims, wherein the organic wastewater comprises liquid manure.

13. The method according to any one of the preceding claims, wherein the organic waste water shows a pH in the range of 6.5-8.0 at the time of application of said waste water to the ion exchanger.

14. The method according to any one of the preceding claims, wherein the beads of the ion exchanger have a mean particle size of 0.4-1.0 mm, preferably 0.6-0.7 mm, and a uniformity coefficient of 1.2 or less, preferably 1.1 or less.
